# EUROPÄISCHE PATENTSCHRIFT

(11) **EP 2 512 714 B1**
(45) Veröffentlichungstag und Bekanntmachung des Hinweises auf die Patenterteilung: **16.09.2015**
(21) Anmeldenummer: 10778908.3
(22) Anmeldetag: 26.10.2010
(51) Int. Cl.: B23D 49/16, B23D 59/00

(54) **WERKZEUGMASCHINENSYSTEM, INSBESONDERE FÜR HANDGEHALTENE WERKZEUGMASCHINEN**
MACHINE TOOL SYSTEM, ESPECIALLY FOR HAND-HELD MACHINE TOOLS
SYSTÈME DE MACHINE-OUTIL NOTAMMENT DESTINÉ À DES MACHINES-OUTILS À MAIN

(30) Priorität: 18.12.2009 DE 102009054977
(43) Veröffentlichungstag der Anmeldung: 24.10.2012
(73) Patentinhaber: Robert Bosch GmbH, 70442 Stuttgart (DE)
(72) Erfinder: KOEDER, Thilo, 70839 Gerlingen (DE); PLATZER, Joachim, 71686 Remseck-Hochberg (DE); HOFFMANN, Ulli, 75223 Niefern-Oeschelbronn (DE)
(86) Internationale Anmeldenummer: PCT/EP2010/066150
(87) Internationale Veröffentlichungsnummer: WO 2011/072931

(56) Entgegenhaltungen:
- DE-A1-102006 052 808
- DE-A1-102007 044 800
- DE-A1-102008 001 762
- JP-A- 7 075 955
- US-A1- 2003 226 438
- US-A1- 2008 236 704

## Beschreibung

Die Erfindung betrifft ein Werkzeugmaschinensystem, Insbesondere für handgehaltene Werkzeugmaschinen, gemäß dem Oberbegriff des Anspruches 1.

### Stand der Technik

Werkzeugmaschinensysteme dieser Art sind in der konkreten Ausbildung als Stichsägen aus der DE 10 2006 052 808 A1 bekannt. Sie sind dahingehend ausgebildet, dass über eine maschinenseitig vorgesehene Detektionseinrichtung eine oberflächenseitig zum Werkstück gegebene Markierungskontur als mit dem Arbeitswerkzeug der Werkzeugmaschine zu verfolgende Arbeitslinie erfasst werden kann. Dies erfolgt über eine Sensorik der Detektionseinrichtung, deren über eine Recheneinheit verarbeiteten Signale in Stellbefehle für eine Stelleinrichtung umgesetzt werden, über die das Arbeitswerkzeug, im Falle der Stichsäge das Sägeblatt in seiner Arbeitsebene durch Verdrehung um seine Hubachse auf die Arbeitslinie ausgerichtet und/oder entlang der Arbeitslinie geführt wird.

Voraussetzung für einen solchen halbautonomen Arbeitsbetrieb ist die einwandfreie Erfassung der Arbeftslinle über die Sensorik in dem werkstückseitigen Arbeitsbereich des Sägeblattes. Dies macht insbesondere bei Markierungskonturen Schwierigkeiten, die gegenüber dem werkstückseitigen Hintergrund in der Kontur verschwommen sind und/oder nur geringen Kontrast zum werkstückseitigen Hintergrund aufweisen.

Aus der DE 10 2006 052 808 A1 geht eine Handhubsäge, insbesondere eine Scrolling Jigsaw, mit einem Hubsägeblatt hervor, die mit einem Sensor, insbesondere in Gestalt einer Kamera, zum Detektieren einer auf einem Werkstück aufgebrachten Anrisslinie versehen ist und die mit einer Mechanik/Aktuatorik versehen ist, mit der der Winkel des Hubsägeblatts einstellbar ist. Entsprechende Sensoriken für Werkzeugmaschinen zur Erfassung von Bildern mit unterschiedlichen Wellenlängenbereichen sind auch aus der US 2003/0226438 A1 und der DE 10 2008 001 762 A1 bekannt. Der Oberbegriff von Anspruch 1 basiert auf der DE 10 2008 001 762 A1.

Die DE 10 2007 044 800 A1 offenbart ferner eine Werkzeugmaschine, insbesondere eine stationäre Sägemaschine, mit einer Arbeitsfläche zum Platzieren eines zu bearbeitenden Werkstücks und einer Werkzeuglagereinheit zum Lagern eines Werkzeugs, die relativ zur Arbeitsfläche beweglich gelagert ist. Die D E 10 2007 044 800 A1 schlägt für eine derartige Maschine eine Erkennungseinheit vor, welche zur Anwesenheitserkennung einer Materialart in einem Werkzeugbereich mittels der spektralen Auswertung einer Strahlung (S_{R}) vorgesehen ist. Bei der Vorrichtung der DE 10 2007 044 800 A1 geht es um die Detektion, d.h. Identifizierung einer Materialart, insbesondere um die Detektion von menschlichem Gewebe, um ein Verletzungsrisikos an einer derartigen Säge zu verringern. Dazu schlägt die DE 10 2007 044 800 A1 eine spektrale Analyse des Reflektionsspektrums einer IR-Sendeeinrichtung vor. Insbesondere weist diese Vorrichtung hierzu einen Sender auf, der Strahlung in unterschiedlichen Wellenlängenbereichen abstrahlt und entsprechend der Bewegung der Werkzeugmaschine, bzw. des Arbeitswerkzeuges nachgeführt wird.

### Offenbarung der Erfindung

Der Erfindung liegt die Aufgabe zu Grunde, auch unter solchen schwierigen Bedingungen, wie sie insbesondere bei unruhig gemusterten Oberflächen gegeben sind, eine jeweilige Markierungskontur noch klar zu erfassen und damit ein sicheres Arbeiten entlang einer ggf. auch schwer erkennbaren Arbeitslinie zu ermöglichen.

Gemäß der Erfindung wird dies mit den Merkmalen des Anspruches 1 erreicht, die Unteransprüche geben zweckmäßige Weiterbildungen an.

Ausgangspunkt für die erfindungsgemäße Ausgestaltung eines Werkzeugmaschinensystems im Hinblick auf die Möglichkeit einer von der Führung der Werkzeugmaschine durch den Benutzer zumindest weitgehend unabhängigen Betriebsweise, also beispielsweise einer autonomen oder halbautonomen Betriebsweise, ist der Grundgedanke, dass sich Markierung und Werkstückoberfläche in den Materialen, ihrer Struktur und/oder ihrer Farbgebung hinsichtlich des Reflektionsverhaltens unterscheiden, so dass die Markierungskontur in einem durch die Sensorik in ihrer Größe vorgegebenen, auch sehr engen Detektionsbereich bei Betrachtung unter unterschiedlichen Wellenlängenbereichen deutlich erkennbar wird.

Die Betrachtung der Markierung bzw. ihrer Kontur unter unterschiedlichen Wellenlängenbereichen lässt sich grundsätzlich unter Verwendung von getrennten, Licht unterschiedlicher Wellenlängen ausstrahlenden Lichtquellen erreichen, wobei im Hinblick auf die Erfassung der Kontur längs des Verlaufes der Markierungslinie in kleinen Abständen zueinander Lichtquellen bevorzugt eingesetzt werden, die eine entsprechend scharfe Bündelung des jeweiligen Lichtstrahls ermöglichen.

Erfindungsgemäß ist vorgesehen, dass die Sensorik die Markierungskontur durch ein Filter betrachtet, das für die unterschiedlichen Wellenlängenbereiche gesonderte Filterbereiche aufweist.

Eine solche Lösung ist in einer besonders einfachen und auch baulich sehr kompakten Bauform insbesondere dadurch zu realisieren, dass die Markierungskontur in zueinander benachbarten Punkten über einen Zeilensensor, insbesondere auch einen Zeilensensor in Form einer Kamera, mit markierungsseitig vorgeschaltetem streifenförmigen Filter betrachtet wird.

Als Streifenfilter ist der Filter im Wechsel mit für unterschiedliche Wellenbereiche durchlässigen streifenförmigen Filterbereichen versehen. Diese verlaufen insbesondere parallel zueinander und auch parallel zu den Standardsuchzeilen der bevorzugt durch einen Zeilensensor gebildeten Sensorik. Bei einer solchen Lösung mit zum Zeilensensor vorgelagerten Streifenfilter ergibt sich eine Betrachtung der Markierungskontur mit in Längsrichtung der Markierung in sehr kleinem Abstand zueinander liegenden Betrachtungspunkten, wenn von den zur Verfügung stehenden Zeilen des Zeilensensors die zu einer jeweiligen Standardsuchzeile dessen benachbart liegende Suchzeile für die Betrachtung unter einem abweichenden Wellenlängenbereich genutzt wird.

Im Rahmen der Erfindung liegt es aber auch, jeweils einer der zueinander benachbarter Standardsuchzeilen des Zeilensensors seitens des Streifenfilters jeweils einen Streifenbereich zuzuordnen, so dass für den Kontrastabgleich längs der Markierungslinie größere Abschnitte zur Verfügung stehen.

Der Streifenfilter weist im Rahmen der Erfindung im Wechsel aufeinander folgende Filterstreifen unterschiedlicher Beschichtung oder von beschichteten und nicht beschichteten Filterstreifen auf.

Insgesamt gesehen ist es zweckmäßig, wenn die Markierungskontur durch einen Filter mit zumindest zwei, insbesondere aber mehr als zwei Wellenlängenbereichen betrachtet wird und für die Erfassung der Markierungskontur jeweils die Zeilen genutzt werden, auf denen die größten Kontrastunterschiede der Markierungskontur zum werkstückseitigen Hintergrund gegeben sind.

Eine weitere erfindungsgemäße Lösung besteht darin, dass das Filter zwei für unterschiedliche Wellenlängenbereiche durchlässige Filterbereiche aufweist und dass die über die beiden für unterschiedliche Wellenlängenbereiche durchlässigen Filterbereiche laufenden Strahlengänge auf einen gemeinsamen, werkstückseitigen Betrachtungspunkt fokussiert sind, wozu zweckmäßigerweise eine zwischen der Sensorik und dem Filter liegende, auf den gemeinsamen werkstückseitigen Betrachtungspunkt fokussierte Optik vorgesehen ist.

Eine solche Optik kann durch eine einfache Linsenanordnung, insbesondere eine Sammellinse gebildet sein.

Auch bei dieser Lösung kann das Filter für unterschiedliche Wellenbereiche unterschiedliche Beschichtungen aufweisen, oder Bereiche mit und ohne Beschichtung.

Weitere Einzelheiten der Erfindung ergeben sich aus den Ansprüchen, der Beschreibung und den Zeichnungen. Es zeigen:
- Fig. 1: als Beispiel eines mit einer Detektionseinrichtung für eine werkstückseitige Markierungskontur ausgerüsteten Werkzeugmaschinensystems eine Stichsäge,
- Fig. 2: in stark schematisierter Ausschnittdarstellung eine Detektionseinrichtung in Form eines Zeilensensors mit vorgelagert im Übergang auf das nicht dargestellte Werkstück angeordnetem Zeilenfilter,
- Fig. 3: in Draufsicht auf die Oberfläche des Werkstücks eine Markierung in Form einer Arbeitslinie mit quer hierzu laufenden, von Detektionselementen des Zeilenfilters ausgehenden Suchzeilen,
- Fig. 4: in Draufsicht schematisiert einen Streifenfilter mit durch Beschichtung gebildeten Filterstreifen, und
- Fig. 5: eine weitere Ausgestaltung der Detektionseinrichtung, wobei über die Sensorik einer Kamera unter Zwischenschaltung eines Filters mit für unterschiedliche Wellenlängsbereiche durchlässigen Filterbereichen ein gemeinsamer, werkstückseitiger Betrachtungspunkt gegeben ist.

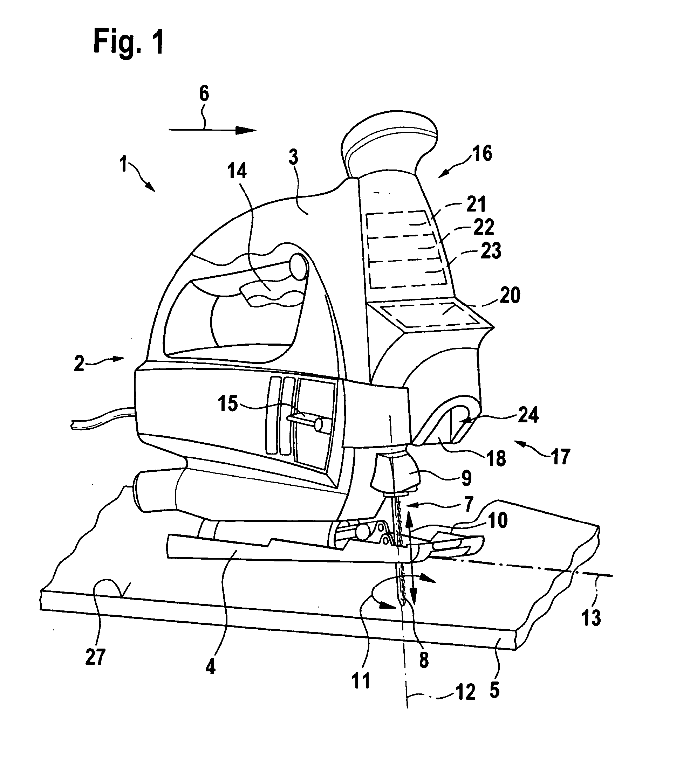

In Fig. 1 ist schematisiert ein Werkzeugmaschinensystem mit einer Stichsäge 2 als Beispiel für eine Werkzeugmaschine 1 dargestellt. Die Stichsäge 2 weist ein Gehäuse 3 auf, das über eine Fußplatte 4 auf der Oberfläche 27 eines Werkstücks 5 verschieblich abgestützt ist. Als Arbeitswerkzeug 7 weist die Stichsäge ein Sägeblatt 8 auf, für das durch seine Formgebung eine Arbeitsebene vorgegeben ist. Das Sägeblatt 8 ist in einer Werkzeugaufnahme 9 gehalten und hubbeweglich in Richtung des Pfeiles 10 angetrieben. Die Hubachse des Sägeblattes 8 fällt in der Darstellung mit einer Drehachse 12 zusammen, um die, bezogen auf das dargestellte Ausführungsbeispiel, das Sägeblatt 8 verdrehbar ist, wie durch den Pfeil 11 veranschaulicht. Über die Drehlage des Sägeblattes 8 ist die jeweilige Sägerichtung als Arbeitsrichtung vorgegeben. Die durch den Pfeil 6 angedeutete Arbeitsrichtung entspricht der Geradeausarbeitsrichtung der Stichsäge, die sich mit der Arbeitsebene des Sägeblattes 8 in dessen neutraler Mittelstellung, also bei unverdrehtem Sägeblatt 8 deckt.

Durch die Verdrehbarkeit des Sägeblattes 8 um die Drehachse 12 entsprechend dem Pfeil 11 kann die Stichsäge 2 als so genannte "scrolling jig saw" betrieben werden, in der die Stichsäge 2 entsprechend der Drehstellung des Sägeblattes 8 auf eine Arbeitslinie 13 ausgerichtet arbeitet, so dass die Stichsäge 2 bei entsprechender maschinenseitiger Detektion der Arbeitslinie 13 halbautonom, oder sogar autonom betrieben werden kann, da sich die benutzerseitige Führungsarbeit zumindest im Wesentlichen auf die Abstützung der aus dem Arbeitsbetrieb resultierenden Reaktionskräfte sowie auf die Aufbringung der Vorschubkraft für die Stichsäge 2 beschränkt.

Die ggf. in weiteren Betriebsarten zu betreibende Stichsäge ist auf diese Betriebsarten über eine Schalteinrichtung 15 einstellbar. Das Ein- und Ausschalten der Stichsäge 2 erfolgt über eine im Griffbereich des Gehäuses 2 vorgesehene Schaltanordnung 14.

Zumindest der halbautonome und autonome Arbeitsbetrieb bedingen eine Detektionseinrichtung 17, die in Fig. 1 im Frontbereich 16 der Stichsäge 2 vorgesehen und zur Erfassung der als Markierung dargestellten, werkstückseitig vorgegebenen Arbeitslinie 13 auf diese ausgerichtet angeordnet ist.

Die Detektionseinrichtung 17 umfasst eine Sensorik 18, in Fig. 1 ebenfalls nur angedeutet, sowie zweckmäßigerweise auch eine auf den werkstückseitigen Arbeitsbereich und den durch diese laufende Arbeitslinie 13 ausgerichtete Beleuchtungsanordnung 24.

Zur Verarbeitung der über die Detektionseinrichtung 17 erfassten Gegebenheiten und der daraus abgeleiteten Signale dient die Recheneinheit 21. Über eine Steuereinheit 22 und eine nachgeordnete Stelleinrichtung 23 erfolgt die Ausrichtung des Sägeblattes 8 auf die mit diesem abzufahrende Arbeitslinie 13. Veranschaulicht ist in Fig. 1 des Weiteren noch ein Display 20, in dem dem Nutzer unter anderem Arbeitssicherheitshinweise vermittelt werden können, die sich aus der Beobachtung des werkstückseitigen Arbeitsbereiches für das Sägeblatt 8 ergeben und/oder die aus anderweitig gewonnen, benutzerseitig relevanten Informationen resultieren.

Wie schon die Darstellung gemäß Fig. 1 erkennen lässt, ist eine eindeutige Detektion der als Markierung werkstückseitig vorgegebenen Arbeitslinie 13 auf Grund der arbeitstechnisch gegebenen Randbedingungen, wie Verschmutzungen, Staub und dergleichen nicht immer einfach. Hinzu kommt, dass ein eindeutiger Kontrast der die Arbeitslinie 13 bildenden Markierung oder Markierungen zum Erscheinungsbild der Werkstückoberfläche 27 häufig nicht gegeben ist, nicht zuletzt auch in Abhängigkeit vom Erscheinungsbild der Oberfläche 27, so beispielsweise bei unruhig gemaserten, gesprenkelten oder anderweitig optisch unruhig gestalteten Oberflächen 27.

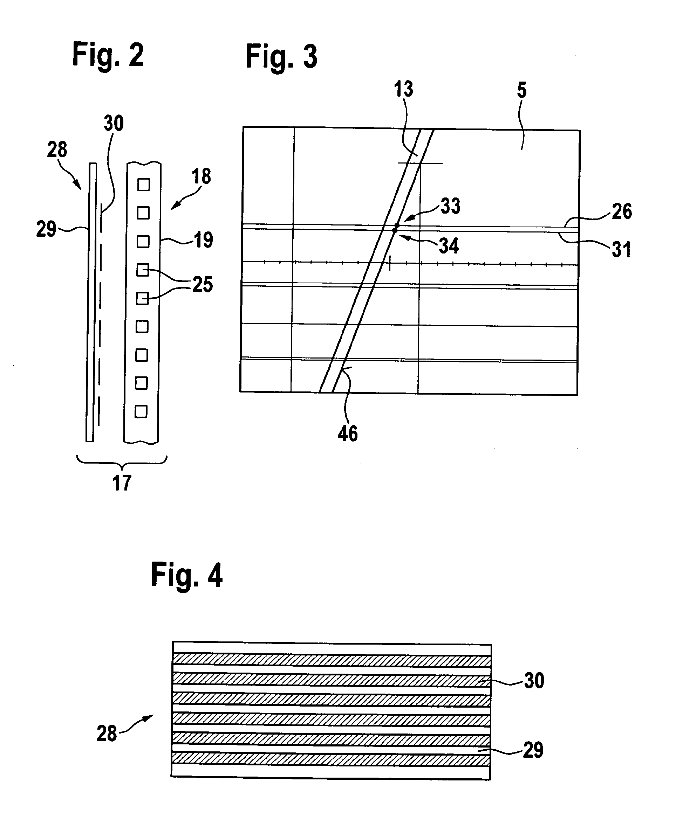

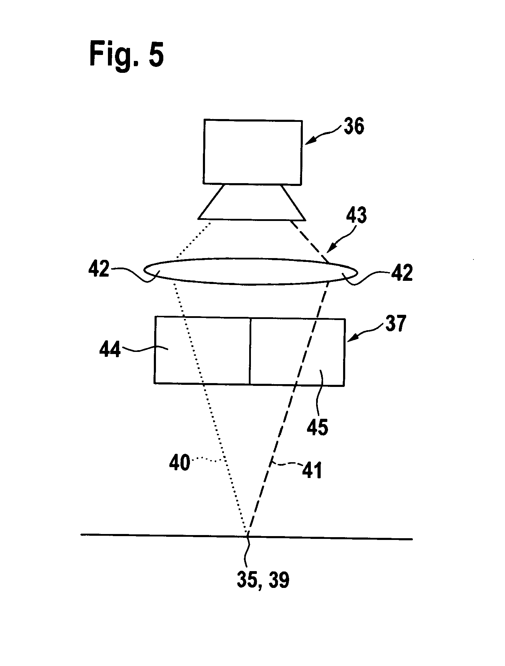

Im Hinblick darauf ist die Detektionseinrichtung 17 bei der erfindungsgemäßen Lösung so ausgebildet, dass die durch die Arbeitslinie 13 gegebenen Markierungskontur 46 über die Sensorik 18 gleichzeitig unter unterschiedlichen Wellenlängenbereichen betrachtet werden, was in einem ersten Ausführungsbeispiel anhand der Figuren 2 bis 4 und in einem zweiten Ausführungsbeispiels anhand der Fig. 5 erläutert wird, teils unter Rückgriff auf die vorstehenden Darlegungen und die zu Fig. 1 verwendeten Bezugszeichen.

So zeigt Fig. 2 symbolisch einen Aufbau für eine im Rahmen der Erfindung verwendbare Detektionseinrichtung 17 mit einer durch einen Zeilensensor 19 gebildeten Sensorik 18, wobei der Zeilensensor 19 eine Anzahl in Reihe angeordneter, insbesondere lichtempfindlicher Detektorelemente 25 aufweist, die auf die oberflächenseitig zum Werkstück 5 vorgesehene, als Arbeitslinie 13 dienende Markierung ausgerichtet sind und die das Werkstück 5, wie in Fig. 3 veranschaulicht, oberflächenseitig in Suchzeilen 26 abscannen, wobei die Detektionseinrichtung 17, in der Ausbildung als Kamera, als Zeilensensor 19 dient.

Vorgeschaltet zur Kamera, bzw. deren Sensorik 18 ist ein Filter 28, der für unterschiedliche Wellenlängsbereiche gesonderte Filterbereiche 29, 30 aufweist, die zeilenförmig nebeneinander liegen, in der Funktion einem Polfilter oder einem Bandpassfilter entsprechend. Über die für unterschiedliche Wellenlängenbereiche durchlässigen oder sperrenden Filterbereiche 29, 30 ergeben sich zur Oberfläche des Werkstücks 5 eng zueinander benachbart liegende und parallel zueinander verlaufende Suchzeilen, von denen von Detektorelementen 25 mit vorgelagerten unbeschichteten Filterbereichen 29 ausgehende beispielsweise die Suchzeilen 26 bilden, somit quasi Standardsuchzeilen, während die über die beschichteten Filterbereiche 30 abgebildeten Suchzeilen mit 31 bezeichnet sind und eng benachbart zu den Suchzeilen 26 verlaufen, wobei, entsprechend dem im Mikrometerbereich liegenden Abstand der von den Detektionselementen 25 ausgehenden Suchzeilen 26, auch der Abstand zwischen den Filterbereichen 28 und 30 in entsprechender Größenordnung liegt.

Beim Vorgehen gemäß Figuren 2 bis 4 mit einer Betrachtung eines Markierungskonturbereiches in sehr eng beabstandeten Betrachtungspunkten 33, 34 mit unterschiedlichen Wellenlängenbereichen und ggf. nachträglicher Zusammenführung der Daten lassen sich auch unter ungünstigen Voraussetzungen hinreichend genaue Hinweise auf die Kontur 46 der Markierungslinie gewinnen, die als Arbeitslinie 13 nachzufahren ist, wobei dies bereits mit wenigen Suchzeilen 26, 31 zu erreichen ist. Da aber bei Verwendung einer Kamera als Zeilensensor eine weit größere Zahl von Zeilen vorliegt, auf die über diese gewonnenen Informationen jedenfalls im Regelfall nicht zurückgegriffen werden muss, kann bei entsprechend unklaren Markierungskonturen 46 auf diese weiteren Zeilen zurückgegriffen werden, ohne dass damit für den Aufbau der Detektionseinrichtung 17 ein weiterer Aufwand verbunden ist.

Bei der Ausgestaltung gemäß Fig. 5 werden nicht, wie bei der Ausgestaltung gemäß Figuren 2 bis 4, eng beieinander liegende Punkte der vorgegebenen Kontur der Markierung als Betrachtungspunkte erfasst, sondern es ist ein gemeinsamer werkstückseitiger Betrachtungspunkt 35 gegeben, der ausgehend von der Sensorik einer Kamera 36 über ein Filter 37 erfasst wird und im Fokus 39 als Schnittpunkt von Strahlengängen 40, 41 liegt, die von der Kamera 36 ausgehend über die Randbereiche 42 einer bevorzugt als Sammellinse 43 ausgebildeten Optik und durch Bereiche 44, 45 des Filters 37 laufen, die für unterschiedliche Wellenlängenbereiche durchlässig sind. Im Betrachtungspunkt 35 wird die Markierungskontur somit über unterschiedliche Wellenlängenbereiche beobachtet, womit das Erfassungsspektrum für die in den Betrachtungspunkt fallende Markierungskontur deutlich verbreitert wird und somit auch die Erfassung der Arbeitslinie 13 und deren Verfolgung im Arbeitsbetrieb selbst unter ungünstigen Voraussetzungen sichergestellt werden kann.

## Patentansprüche

1. Werkzeugmaschinensystem, insbesondere für handgehaltene Werkzeugmaschinen, mit einer Detektionseinrichtung (17) für eine oberflächenseitig zum Werkstück (5) gegebenen Markierungskontur (46) mittels einer maschinenseitig vorgesehenen Sensorik (18) zur gleichzeitigen Betrachtung der Markierungskontur (46) unter unterschiedlichen Wellenlängenbereichen, **dadurch gekennzeichnet, dass** die Sensorik (18) die Markierungskontur (46) durch ein Filter (28, 37) betrachtet, das für die unterschiedlichen Wellenlängenbereiche gesonderte Filterbereichen (28, 29; 44, 45) aufweist.

2. Werkzeugmaschinensystem nach Anspruch 1, **dadurch gekennzeichnet, dass** ein Zeilensensor (19), insbesondere eine Kamera, die Markierungskontur (46) in zueinander benachbarten Betrachtungspunkten (33, 34) über mit markierungsseitig vorgeschaltetem streifenförmigen Filter (28) betrachtet.

3. Werkzeugmaschinensystem nach Anspruch 2, **dadurch gekennzeichnet, dass** der Filter (28) als Streifenfilter im Wechsel für unterschiedliche Wellenlängenbereiche durchlässige streifenförmige Filterbereiche (29, 30) aufweist.

4. Werkzeugmaschinensystem nach Anspruch 2 oder 3, **dadurch gekennzeichnet, dass** im Wechsel aufeinander folgende Filterstreifen (29, 30) unterschiedlich beschichtet oder beschichtet und unbeschichtet sind, wobei die Filterstreifen (29, 30) und die Suchzeilen (26, 31) des Zeilensensors (19) gleiche Erstreckung aufweisen.

5. Werkzeugmaschinensystem nach einem der vorhergehenden Ansprüche, **dadurch gekennzeichnet, dass** die Markierungskontur (46) durch den Filter (28) mit zumindest zwei, insbesondere auch mehr als zwei Wellenlängenbereichen betrachtet und für die Erfassung der Markierungskontur (46) jeweils jene Zeilen (26, 31) genutzt werden, auf denen die größten Kontrastunterschiede der Markierungskontur (46) zum werkstückseitigen Hintergrund gegeben ist.

6. Werkzeugmaschinensystem nach Anspruch 1, **dadurch gekennzeichnet, dass** das Filter (37) zweier für unterschiedliche Wellenlängenbereiche durchlässige Filterbereiche aufweist und über diese Filterbereiche (44, 45) laufende Strahlengänge (40, 41) in einem gemeinsamen werkstückseitigen Betrachtungspunkt (35) zusammenlaufen.

7. Werkzeugmaschinensystem nach Anspruch 6, **dadurch gekennzeichnet, dass** zwischen der Sensorik (36) und dem Filter (37) eine auf den Betrachtungspunkt fokussierte Optik vorgesehen ist, die durch eine Linsenanordnung, insbesondere eine Sammellinse (43) gebildet ist.

8. Werkzeugmaschinensystem nach einem der Ansprüche 6 oder 7, **dadurch gekennzeichnet, dass** der Filter (37) lediglich zwei für unterschiedliche Wellenlängenbereiche durchlässige Filterbereiche (44, 45) aufweist.

9. Werkzeugmaschinensystem nach Anspruch 8, **dadurch gekennzeichnet, dass** die für unterschiedliche Wellenlängenbereiche durchlässigen Filterbereiche (44, 45) unterschiedlich beschichtet oder beschichtet und nicht beschichtet sind.

## Claims

1. Machine tool system, especially for hand-held machine tools, having a detection device (17) for a marking contour (46) provided on the surface of the workpiece (5) by means of sensor unit (18) provided on the machine for the simultaneous observation of the marking contour (46) in different wavelength ranges, **characterized in that** the sensor unit (18) observes the marking contour (46) through a filter (28, 37) which has separate filter regions (28, 29; 44, 45) for the different wavelength ranges.

2. Machine tool system according to Claim 1, **characterized in that** a line sensor (19), in particular a camera, observes the marking contour (46) is observed at mutually adjacent observation points (33, 34) by means of a strip-shaped filter (28) concomitantly placed in front on the marking side.

3. Machine tool system according to Claim 2, **characterized in that** the filter (28) as a strip filter alternately comprises strip-shaped filter regions (29, 30) which transmit different wavelength ranges.

4. Machine tool system according to Claim 2 or 3, **characterized in that** alternating successive filter strips (29, 30) are coated differently, or coated and uncoated, the filter strips (29, 30) and the search lines (26, 31) of the line sensor (19) having the same extent.

5. Machine tool system according to one of the preceding claims, **characterized in that** the marking contour (46) is observed through the filter (28) with at least two, in particular also more than two, wavelength ranges and those lines (26, 31) on which there are the greatest contrast differences of the marking contour (46) from the background on the workpiece are respectively used for the detection of the marking contour (46).

6. Machine tool system according to Claim 1, **characterized in that** the filter (37) comprises two filter regions which transmit different wavelength ranges and beam paths (40, 41) extending over these filter regions (44, 45) converge at a common observation point (35) on the workpiece.

7. Machine tool system according to Claim 6, **characterized in that** optics, which is formed by a lens arrangement, in particular a converging lens (43), is focused onto the observation point and is provided between the sensor unit (36) and the filter (37).

8. Machine tool system according to Claim 6 or 7, **characterized in that** the filter (37) comprises only two filter regions (44, 45) which transmit different wavelength ranges.

9. Machine tool system according to Claim 8, **characterized in that** the filter regions (44, 45) which transmit different wavelength ranges are differently coated, or coated and uncoated.

## Revendications

1. Système de machine-outil notamment destiné à des machines-outils à main avec un dispositif de détection (17) pour un contour de marquage (46) donné pour la pièce (5) du côté de la surface au moyen d'un système de détection (18) prévu du côté machine pour une observation simultanée du contour de marquage (46) dans différentes gammes d'ondes, **caractérisé en ce que** le système de détection (18) prend en considération le contour de marquage (46) par un filtre (28, 37) qui comporte des zones de filtre (28, 29 ; 44, 45) spéciales pour différentes gammes d'ondes.

2. Système de machine-outil selon la revendication 1, **caractérisé en ce qu'**un capteur de lignes (19), en particulier une caméra, observe le contour de marquage (46) dans des points d'observation voisins les uns des autres (33, 34) au-dessus avec un filtre (28) en forme de bandes placé en avant du côté marquage.

3. Système de machine-outil selon la revendication 2, **caractérisé en ce que** le filtre (28) comporte des zones de filtre (29, 30) en forme de bandes transparentes en tant que filtre à bandes en alternance pour les gammes d'ondes différentes.

4. Système de machine-outil selon la revendication 2 ou 3, **caractérisé en ce que** les bandes de filtre (29, 30) se suivant en alternance sont revêtues de façon différente ou revêtues ou non revêtues, pour lequel les bandes de filtre (29, 30) et les lignes de recherche (26, 31) du capteur de lignes (19) comportent une même extension.

5. Système de machine-outil selon l'une quelconque des revendications précédentes, **caractérisé en ce que** le contour de marquage (46) observe par le filtre (28) avec au moins deux, en particulier également plus de deux gammes d'ondes et pour la saisie du contour de marquage (46) sont respectivement utilisées les lignes (26, 31) sur lesquelles il y a les différences de contraste les plus grandes du contour de marquage (46) pour l'arrière-plan du côté pièce.

6. Système de machine-outil selon la revendication 1, **caractérisé en ce que** le filtre (37) comporte deux zones de filtre transparentes pour les différentes gammes d'ondes et des trajectoires de rayons (40, 41) passant par ces zones de filtre (44, 45) convergent dans un point d'observation (35) commun du côté pièce.

7. Système de machine-outil selon la revendication 6, **caractérisé en ce qu'**un système optique focalisé sur le point d'observation est prévu entre le système de détection (36) et le filtre (37) qui est formé par un agencement de lentille, en particulier une lentille convergente (43).

8. Système de machine-outil selon l'une quelconque des revendications 6 ou 7, **caractérisé en ce que** le filtre (37) ne comporte que deux zones de filtre (44, 45) transparentes pour différentes gammes d'ondes.

9. Système de machine-outil selon la revendication 8, **caractérisé en ce que** pour différentes gammes d'ondes, des zones de filtre transparentes (44, 45) sont différemment revêtues ou revêtues et non revêtues.
